# EUROPÄISCHE PATENTSCHRIFT

(11) **EP 2 116 106 B1**
(45) Veröffentlichungstag und Bekanntmachung des Hinweises auf die Patenterteilung: **13.03.2013**
(21) Anmeldenummer: 08701500.4
(22) Anmeldetag: 15.01.2008
(51) Int. Cl.: H05B 33/08, G03B 21/00

(54) **ANSTEUERSCHALTUNG UND VERFAHREN ZUR ANSTEUERUNG VON GROSSFLÄCHIGEN HALBLEITERLICHTQUELLEN**
CONTROL CIRCUIT AND METHOD FOR CONTROLLING LARGE-SCALE SEMICONDUCTOR LIGHT SOURCES
CIRCUIT DE CONTRÔLE ET PROCÉDÉ DE CONTRÔLE DE SOURCES LUMINEUSES À SEMI-CONDUCTEUR DE GRANDE SURFACE

(30) Priorität: 29.01.2007 DE 102007004393
(43) Veröffentlichungstag der Anmeldung: 11.11.2009
(73) Patentinhaber: OSRAM GmbH, 81543 München (DE)
(72) Erfinder: HYING, Ralf, 81827 München (DE); NIEDERMEIER, Peter, 80995 München (DE)
(86) Internationale Anmeldenummer: PCT/EP2008/050391
(87) Internationale Veröffentlichungsnummer: WO 2008/092737

(56) Entgegenhaltungen:
- US-A1- 2005 226 003
- US-A1- 2006 007 103
- US-A1- 2006 176 411
- US-B1- 6 547 400
- APPLICATION BRIEF AB27: "For LCD Backlighting LUXEON DCC" 2005, LUMILEDS LIGHTING US , USA , XP002477630 Seite 23, rechte Spalte - Seite 24, linke Spalte
- APPLICATION BRIEF AB12: "Custom LUXEON Design Guide" 2006, PHILIPS LUMILEDS LIGHTING CO. , USA , XP002477631 Seite 11 - Seite 12; Abbildungen 39-41
- APPLICATION BRIEF AB20-3: "Electrical Design Considerations for SuperFlux LEDs" 2002, LUMILEDS LIGHTING , USA , XP002477632 Seite 31 - Seite 36; Abbildungen 3.21-3.28

## Beschreibung

### Technisches Gebiet

Die Erfindung bezieht sich auf die räumliche Schaltungsanordnung zur Ansteuerung von großflächigen Halbleiterlichtquellen. Die Erfindung bezieht sich außerdem auf ein Verfahren zur effektiven Ansteuerung von großflächigen Halbleiterlichtquellen.

### Stand der Technik

Heutzutage werden LED-Module üblicherweise mit einem vergleichsweise geringem Anteil an Treiberelektronik versehen. Um Kosten zu sparen und Synergien zu nutzen, wird der Großteil der Ansteuerelektronik in einem externen Betriebsgerät zusammengefasst, und auf dem LED-Modul befinden sich lediglich eine Modul-Kodierung und einige für den Betrieb vorteilhafte Filter. Dies hat den Vorteil, dass ein Betriebsgerät für mehrere verschiedene LED-Module verwendet werden kann.

Ein solches Betriebsgerät ist aus der US 2006/0007103 A1 bekannt. Dort ist ein Betriebsgerät für die Hinterleuchtung von Displays mit Leuchtdioden bekannt, welches die Leuchtdioden mit verschieden hohen Strompulsen ansteuern kann.

Da das Betriebsgerät räumlich nicht immer direkt am LED-Modul angeschlossen werden kann, sind die Leitungen zwischen der Ansteuerelektronik und dem LED-Modul oft vergleichsweise lang. Für normale Halbleiterlichtquellen stellt dies noch kein größeres Problem dar, da diese oftmals mit einem konstantem Strom betrieben werden. Bei Beleuchtungslösungen, die ein schnelles Ein- und Ausschalten der Halbleiterlichtquellen fordern treten jedoch Probleme verschiedener Art auf. Die langen Zuleitungen stellen eine parasitäre Kapazität und Induktivität dar, die sich nachteilig auf das Betriebsverhalten des Gesamtsystems auswirkt. Sobald die Betriebselektronik die Information über die Temperatur der Leuchtdioden benötigt, ist ein zusätzlicher Temperatursensor auf dem LED-Modul notwendig, was den Verschaltungsaufwand und die Kosten steigert. Für Gepulste Betriebsverfahren ist die elektromagnetische Störstrahlung ein ernsthaftes Problem, das primär durch die langen Zuleitungen, die als Abstrahlantenne wirken, verursacht wird.

### Aufgabe

Die Aufgabe der vorliegenden Erfindung besteht deshalb darin, die räumliche Anordnung der Schaltungsanordnung so weiterzubilden, dass die obengenannten Nachteile vermieden werden.

### Darstellung der Erfindung

Dies wird dadurch erreicht, dass die zugehörige Ansteuerschaltung für die Leuchtdioden sehr nahe bei diesen angeordnet wird, um ein effizientes Betriebsverfahren durchführen zu können. Die Erfindung findet Vorzugsweise für sogenannte Hochleistungsleuchtdioden Verwendung, das sind Leuchtdioden mit gegenüber üblichen Leuchtdioden deutlich größerer Leuchtfläche und stark erhöhtem Stromverbrauch.

Moderne Hochleistungsleuchtdioden sind hochgezüchtete Lichtquellen, die mit einem speziellen Verfahren betrieben werden müssen, um allen Anforderungen an moderne Beleuchtungs- und Projektionstechnik gerecht zu werden. Speziell im Bereich der Projektionstechnik werden hochentwickelte Betriebsverfahren benötigt, um den Anforderungen an eine erhöhte Bildqualität zu erreichen. Die Hochleistungsleuchtdioden werden mit sehr steilflankigen und mitunter auch sehr kurzen Signalen (Pulsen) angesteuert (Pulsanstiegszeit kleiner oder gleich 3 µs, Pulslängen bis hinab zu 4 µs). Zwischen diesen Pulsen befinden sich mehr oder weniger lange Pulspausen, in denen der Strom Null wird. Die gesamte Abfolge der Pulse und Pulspausen hintereinander wird hier als Pulszug bezeichnet. Die Signalabläufe müssen ebenso einen sehr hohen Dynamikumfang besitzen, so kann es vorkommen, dass der Ausgangsstrom innerhalb eines Pulses von einem maximalen Stromwert auf einen Stromwert, der 1% des maximalen Wertes entspricht, geschaltet werden muss. Solch ein Puls ist dann in mehrere Pulssegmente unterteilt. Um solche Signalfolgen realisieren zu können, müssen die Einflüsse der Zuleitungen minimiert werden.

Dies gilt ebenso für die übergeordnete Regelcharakteristik. Die Hochleistungsleuchtdioden werden mit einer Hochauflösenden (>=8Bit Auflösung) Stromregelung betrieben. Dies ist notwendig um ein gleichmäßiges Lebensdauerverhalten der verschiedenen Hochleistungsleuchtdioden auf dem Modul zu gewährleisten. Bei kurz gehaltenen Stromzuführungen und kurzem Feedback-Pfad arbeitet der Regler wesentlich stabiler und ist weniger anfällig auf Störungen.

Um diese notwendigen Vorraussetzungen zu Schaffen werden daher die Treiberschaltungen für die Hochleistungsleuchtdioden erfindungsgemäß direkt auf dem Modul integriert. Die Anbindung an das Host-System erfolgt lediglich über die Stromversorgung und ein digitales Interface zum Einstellen der Stromhöhen und des Timings.

Vorteilhafterweise sind die Treiberschaltungen so angeordnet dass die stromführenden Pfade zu den ihnen zugeordneten Hochleistungsleuchtdioden möglichst kurz sind.

Bei mehrfarbigen Anwendungen, wie sie in der Projektion gebraucht werden, können die Hochleistungsleuchtdioden und die zugehörigen Treiberschaltungen für alle Farben auf einem Modul integriert sein.

Bei sehr leistungsstarken Modulen kann es von Vorteil sein, einen oder mehrere systemweite Vor-Regler einzusetzen. Die Vor-Regler liefern eine angepasste Leistung mit einer Spannung, die nur leicht über der Hochleistungsleuchtdiodenspannung liegt. So können die Treiberschaltungen effizient arbeiten und die Verlustleistung wird minimiert. Bei Mehrfarbigen Modulen kann z.B. für jede Farbe ein einzelner Vor-Regler eingesetzt werden.

### Kurze Beschreibung der Zeichnung(en)

- Fig. 1: Schnitt durch ein LED Modul auf einer Aluminiumkernplatine nach dem Stand der Technik
- Fig. 2: Schnitt durch ein erfindungsgemäßes LED Modul mit Hochleistungsleuchtdioden und zugehörigen Treiberschaltungen auf einer Aluminiumkernplatine.
- Fig. 3: Draufsicht des erfindungsgemäßen LED-Moduls
- Fig. 4: Beispielhafte Pulsfolge einer bevorzugten Ausführungsform

### Bevorzugte Ausführung der Erfindung

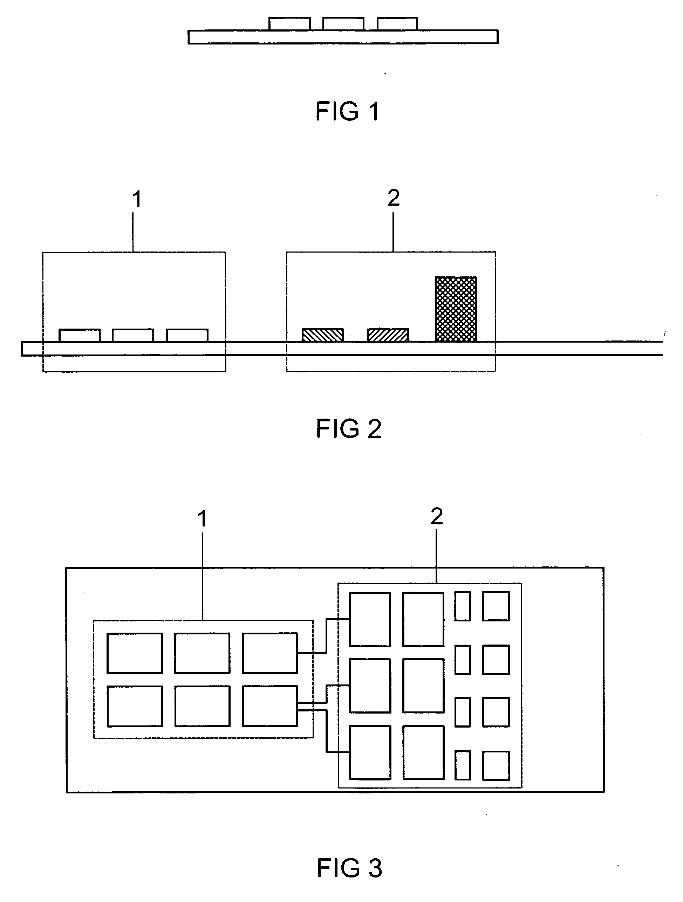

Fig. 1 zeigt den Schnitt durch ein bekanntes LED-Modul nach dem Stand der Technik. Die Hochleistungsleuchtdioden sind auf einer Aluminiumkernplatine montiert, um eine gute Wärmeableitung zu gewährleisten. Eine Aluminiumkernplatine besteht hauptsächlich aus einer Aluminiumplatte, auf die eine dünne Leiterplatte auflaminiert ist. Es kann aber anstatt Aluminium auch jedes andere thermisch gut leitfähige Material Anwendung finden. Auf diese Leiterplatte werden in einem Standardverfahren die Bauteile aufgelötet. Dadurch, dass die Leiterplatte sehr dünn ist, und die Hauptmasse des Moduls aus Aluminium oder einem anderen thermisch gut leitfähigen Material besteht wird eine sehr gute Wärmeableitung erreicht.

Fig. 2 zeigt ein erfindungsgemäßes LED-Modul, bei dem neben den Hochleistungsleuchtdioden (1) auch die zugehörige Ansteuerelektronik (2) auf der Platine Platz findet. Dies hat mehrere Vorteile:
- Die Strompfade von der Ansteuerelektronik zu den Hochleistungsleuchtdioden sind sehr kurz, so dass sich gute Regeleigenschaften und effiziente Betriebsverfahren realisieren lassen.
- Die Messung für die Stromregelung kann genauer ausgeführt werden, da die parasitären Effekte durch die kurzen Zuleitungen minimiert werden.
- Hochleistungsleuchtdioden und Treiberschaltungen unterliegen der gleichen Temperatur, so dass es wesentlich einfacher ist, Temperatureffekte in der Treiberschaltung auszuregeln und eine Überhitzung der Leuchtdioden zu vermeiden.
- Durch die gepulste Ansteuerung und die hohen Flankensteilheiten wird die elektromagnetische Verträglichkeit zum Problem. Die Kürze der Strompfade hilft zusätzlich, die elektromagnetische Abstrahlung zu minimieren.

Fig. 3 zeigt eine Draufsicht des erfindungsgemäßen Moduls. Die Treiberschaltungen (2) sind mit einem gewissen Mindestabstand zu den Hochleistungsleuchtdioden (1) platziert, um optische Vorrichtungen, die über den Hochleistungsleuchtdioden (1) platziert werden nicht zu behindern. Durch die direkte Anbindung ist die Länge der Strompfade zu den Hochleistungsleuchtdioden (1) minimiert.

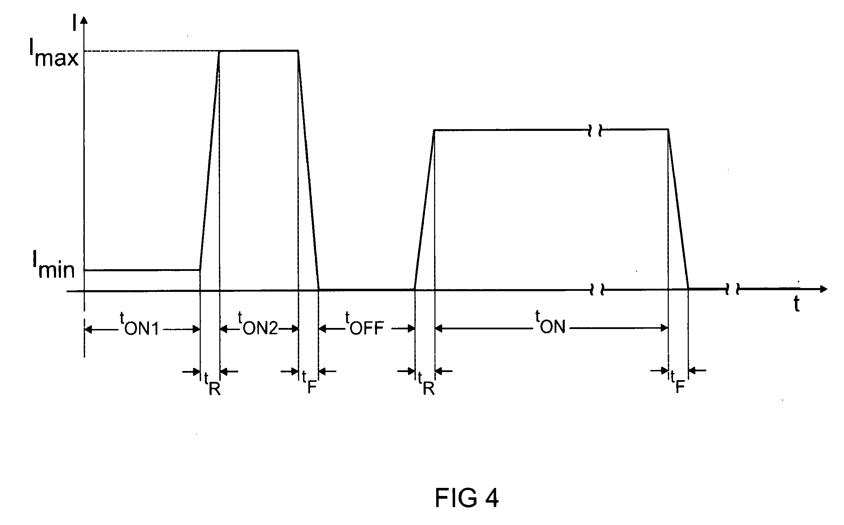

Fig. 4 schließlich zeigt eine beispielhafte Pulsfolge der bevorzugten Ausführungsform. Die Treiberschaltung kann einen Maximalstrom Iₘₐₓ und eine minimalen Strom Iₘᵢₙ darstellen. Die Flankenan- und Abstiegszeiten sind mit t_{R} bzw. t_{F} bezeichnet. Die maximale Flankensteilheit ist im 1. Puls dargestellt und wird durch die Zeitspanne t_{F} repräsentiert, innerhalb derer der Hochleistungsleuchtdiodenstrom vom Maximalstrom zu null wird. t_{OFF} steht für die Zeitdauer zwischen zwei Pulsen, t_{ON} normalerweise für die Länge des Pulses minus der Dauer des Flankenanstiegs. Es kann aber auch vorkommen, dass ein Puls aus verschiedenen Stromwerten zusammengesetzt ist, wie im 1. Puls in Fig. 4 dargestellt. Hier besteht der Puls aus einem ersten Pulssegment mit der Einschaltzeit t_{ON1} beim Strom I_{Min} und einem zweiten Pulssegment mit der Einschaltzeit t_{ON2} beim Strom I_{Max}.

Die bevorzugte Ausführungsform der Ansteuerschaltung besteht aus einem Längsregler, der mit dem gewünschten Pulszug ein- und ausgeschaltet wird. Der Längsregler wird mittels einer schnellen Logik angesteuert und kann so den Strom innerhalb eines Pulses schnell ändern und einstellen. Bei Modulen größerer Leistung kann auch ein Vor-Regler eingesetzt werden, so dass die Verlustleistung im Längsregler minimiert wird.

Alternativ wäre auch ein Schaltregler denkbar, jedoch sind Schaltregler mit vorgenannten Reaktionszeiten aufwändig und teuer in der Ausführung.

## Patentansprüche

1. Ansteuerschaltung zur Ansteuerung von Halbleiterlichtquellen mit einer oder mehrerer auf einem Schaltungsträger aufgebrachten Halbleiterlichtquellen, **dadurch gekennzeichnet, dass** die Ansteuerschaltung für die Halbleiterlichtquellen mit auf dem Schaltungsträger aufgebracht ist und Pulse mit einer Anstiegszeit von unter 3µs erzeugen kann, und die thermische Leitfähigkeit des Schaltungsträgers so groß ist, dass die Temperatur der Halbleiterlichtquellen in der Ansteuerschaltung gemessen werden kann.

2. Ansteuerschaltung nach Anspruch 1, **dadurch gekennzeichnet, dass** die Ansteuerschaltung Pulse mit einer Pulsdauer von 4µs - 150 ms erzeugen kann.

3. Ansteuerschaltung nach einem der Ansprüche 1 oder 2, **dadurch gekennzeichnet, dass** die Ansteuerschaltung die Stromstärke innerhalb eines Pulses regeln und auf verschiedene Werte einstellen kann.

4. Ansteuerschaltung nach Anspruch 3, **dadurch gekennzeichnet, dass** die Ansteuerschaltung die Stromstärke innerhalb eines Pulses von 1% der Stromstärke auf 100% der Stromstärke einregeln kann.

5. Ansteuerschaltung einem der vorhergehenden Ansprüche, **dadurch gekennzeichnet, dass** der Schaltungsträger aus einer Aluminiumkernplatine besteht.

6. Ansteuerschaltung einem der vorhergehenden Ansprüche, **dadurch gekennzeichnet, dass** der Schaltungsträger aus einer Kupferkernplatine besteht.

7. Ansteuerschaltung nach einem der vorhergehenden Ansprüche, **dadurch gekennzeichnet, dass** der Schaltungsträger aus einem Keramiksubstrat besteht.

8. Ansteuerschaltung nach einem der vorhergehenden Ansprüche, **dadurch gekennzeichnet, dass** der Schaltungsträger dazu geeignet ist, optische Elemente für die Halbleiterlichtquellen aufzunehmen.

9. Ansteuerschaltung nach einem der vorhergehenden Ansprüche, **dadurch gekennzeichnet, dass** die Ansteuerschaltung einem Linearregler beinhaltet, der im Takt von Pulszügen, die aus den aufeinanderfolgenden Pulsen und Pulspausen bestehen, ein- und ausgeschaltet wird.

10. Ansteuerschaltung nach einem der vorhergehenden Ansprüche, **dadurch gekennzeichnet, dass** die Ansteuerschaltung einen getakteten Schaltwandler beinhaltet, der die Pulszüge erzeugen kann.

11. Verfahren zum Betreiben von Halbleiterlichtquellen die zu mehreren auf einem Schaltungsträger angeordnet sind, wobei die Ansteuerschaltungen für die Halbleiterlichtquellen mit auf der Platine angeordnet sind, **dadurch gekennzeichnet, dass** die Halbleiterlichtquellen mit aufeinanderfolgenden Pulsen betrieben werden, wobei die die Dauer der Pulse unterschiedlich sein kann und die Pause zwischen zwei Pulsen unterschiedlich sein kann, und wobei die Stromstärke innerhalb eines Pulses auf unterschiedliche Stromwerte geregelt werden kann, und die thermische Leitfähigkeit des Schaltungsträgers so groß ist, dass die Temperatur der Halbleiterlichtquellen in der Ansteuerschaltung gemessen werden kann.

12. Verfahren zum Betreiben von Halbleiterlichtquellen nach Anspruch 11, **dadurch gekennzeichnet, dass** die Stromstärke innerhalb eines Pulses von 1% der Stromstärke auf 100% der Stromstärke geregelt werden kann.

## Claims

1. Drive circuit for driving semiconductor light sources, having one or more semiconductor light sources applied to a circuit mount, **characterized in that** the drive circuit for the semiconductor light sources is also applied to the circuit mount and can generate pulses with a rise time of less than 3 µs and the thermal conductivity of the circuit mount is so high that the temperature of the semiconductor light sources in the drive circuit can be measured.

2. Drive circuit according to Claim 1, **characterized in that** the drive circuit can generate pulses with a pulse duration of 4 µs - 150 ms.

3. Drive circuit according to either of Claims 1 and 2, **characterized in that** the drive circuit can control the current intensity in a pulse and can set it to different values.

4. Drive circuit according to Claim 3, **characterized in that** the drive circuit can control the current intensity in a pulse from 1% of the current intensity to 100% of the current intensity.

5. Drive circuit according to one of the preceding claims, **characterized in that** the circuit mount comprises an aluminum-core printed circuit board.

6. Drive circuit according to one of the preceding claims, **characterized in that** the circuit mount comprises a copper-core printed circuit board.

7. Drive circuit, according to one of the preceding claims, **characterized in that** the circuit mount comprises a ceramic substrate.

8. Drive circuit according to one of the preceding claims, **characterized in that** the circuit mount is suitable for holding optical elements for the semiconductor light sources.

9. Drive circuit according to one of the preceding claims, **characterized in that** the drive circuit includes a linear controlled that is switched on and off in time with pulse trains that comprise consecutive pulses and pulse pauses.

10. Drive circuit according to one of the preceding claims, **characterized in that** the drive circuit includes a clocked switched-mode converter that can generate the pulse trains.

11. Method for operating semiconductor light sources that are arranged severally on a circuit mount, the drive circuits for the semiconductor light sources also being arranged on the printed circuit board, **characterized in that** the semiconductor light sources are operated with consecutive pulses, it being possible for the duration of the pulses to differ and for the pause between two pulses to differ and for the current intensity in a pulse to be controlled to different current values and the thermal conductivity of the circuit mount being so high that the temperature of the semiconductor light sources in the drive circuit can be measured.

12. Method for operating semiconductor light sources according to Claim 11, **characterized in that** the current intensity in a pulse can be controlled from 1% of the current intensity to 100% of the current intensity.

## Revendications

1. Circuit de commande pour commander des sources lumineuses à semi-conducteur, comprenant une ou plusieurs sources lumineuses à semi-conducteur montées sur un support de circuit, **caractérisé en ce que** le circuit de commande des sources lumineuses à semi-conducteur est lui aussi monté sur le support de circuit et peut produire des impulsions ayant un temps de montée inférieur à 3 µs, et **en ce que** la conductivité thermique du support de circuit est telle que la température des sources lumineuses à semi-conducteur peut être mesurée dans le circuit de commande.

2. Circuit de commande selon la revendication 1, **caractérisé en ce que** le circuit de commande peut produire des impulsions ayant une durée d'impulsion comprise entre 4 µs et 150 ms.

3. Circuit de commande selon l'une des revendications 1 ou 2, **caractérisé en ce que** le circuit de commande peut réguler l'intensité du courant en l'espace d'une impulsion et la régler sur différentes valeurs.

4. Circuit de commande selon la revendication 3, **caractérisé en ce que** le circuit de commande peut régler l'intensité du courant en l'espace d'une impulsion de 1 % de l'intensité du courant à 100 % de l'intensité du courant.

5. Circuit de commande selon l'une des revendications précédentes, **caractérisé en ce que** le support de circuit est constitué d'une platine avec âme en aluminium.

6. Circuit de commande selon l'une des revendications précédentes, **caractérisé en ce que** le support de circuit est constitué d'une platine avec âme en cuivre.

7. Circuit de commande selon l'une des revendications précédentes, **caractérisé en ce que** le support de circuit est constitué d'un substrat de céramique.

8. Circuit de commande selon l'une des revendications précédentes, **caractérisé en ce que** le support de circuit est apte à recevoir des éléments optiques pour les sources lumineuses à semi-conducteur.

9. Circuit de commande selon l'une des revendications précédentes, **caractérisé en ce que** le circuit de commande comporte un régulateur linéaire, qui est connecté et déconnecté à la cadence de trains d'impulsions, lesquels sont composés d'une succession d'impulsions et de pauses entre impulsions.

10. Circuit de commande selon l'une des revendications précédentes, **caractérisé en ce que** le circuit de commande comporte un convertisseur de commutation cadencé, qui est capable de produire les trains d'impulsions.

11. Procédé pour faire fonctionner des sources lumineuses à semi-conducteur, qui sont plusieurs à être montées sur un support de circuit, le circuit de commande des sources lumineuses à semi-conducteur étant lui aussi monté sur la platine, **caractérisé en ce que** l'on fait fonctionner les sources lumineuses à semi-conducteur par une succession d'impulsions, où la durée des impulsions peut être variable et où la pause entre deux impulsions peut être variable, et où l'intensité du courant peut être réglée en l'espace d'une impulsion sur différentes valeurs, et où la conductivité thermique du support de circuit est telle que la température des sources lumineuses à semi-conducteur peut être mesurée dans le circuit de commande.

12. Procédé pour faire fonctionner des sources lumineuses à semi-conducteur selon la revendication 11, **caractérisé en ce que** l'intensité du courant peut être réglée en l'espace d'une impulsion de 1 % de l'intensité du courant à 100 % de l'intensité du courant.
